# EUROPÄISCHE PATENTSCHRIFT

(11) **EP 1 688 819 B1**
(45) Veröffentlichungstag und Bekanntmachung des Hinweises auf die Patenterteilung: **01.08.2007**
(21) Anmeldenummer: 05002506.3
(22) Anmeldetag: 07.02.2005
(51) Int. Cl.: G06F 1/04, H04B 15/04

(54) **Vorrichtung und Verfahren zum seriellen Übertragen von Daten unter Verwendung eines Spreizspektrums zum Erhöhen der elektromagnetischen Verträglichkeit**
Device and method for serially transmitting data using a spread spectrum to encrease the electromagnetic compatibility
Dispositif et procédé pour la transmission de données en série utilisant un spectre étalé pour augmenter la compatibilité électromagnétique

(43) Veröffentlichungstag der Anmeldung: 09.08.2006
(73) Patentinhaber: INOVA Semiconductors GmbH, 81671 München (DE)
(72) Erfinder: Riedel, Michael c/o Inova Semiconductors GmbH, 81671 München (DE); Neumann, Roland c/o Inova Semiconductors GmbH, 81671 München (DE)
(74) Vertreter: Winter, Brandl, Fürniss, Hübner Röss, Kaiser, Polte Partnerschaft Patent- und Rechtsanwaltskanzlei

(56) Entgegenhaltungen:
- EP-A- 0 823 801
- WO-A-00/25493
- WO-A-99/38281
- US-A- 5 894 517
- US-A- 6 144 242

## Beschreibung

### Technisches Gebiet

Die vorliegende Erfindung betrifft eine Vorrichtung und ein Verfahren zum seriellen Übertragen von Daten unter Verwendung eines Spreizspektrums zum Erhöhen der elektromagnetischen Verträglichkeit gemäß den Oberbegriffen der Ansprüche 1 und 12.

### Stand der Technik

Im Stand der Technik ist es bekannt, dass es bei Anwendungen zum Übertragen von Daten in einem Kraftfahrzeug erforderlich ist, dass dieses Übertragen eine geringe Latenz aufweist und das Übertragen mit unkomprimierten Daten durchgeführt wird.

Um ein derartiges Übertragen von Daten durchzuführen, ist von der Anmelderin der vorliegenden Erfindung eine Technologie vorgeschlagen worden, die einen zuverlässigen seriellen digitalen Datenpfad vorsieht. Die wesentliche integrierte Schaltung, die bei dieser Technologie verwendet wird, wird Gigastar^{®} bezeichnet und beinhaltet im Wesentlichen einen Sender und einen Empfänger. Details dieser Technologie sind in den PCT-Anmeldungen PCT/EP03/10522, PCT/EP03/10523 und PCT/EP03/10524 offenbart. Aufgrund der rein seriellen Natur ist der verwendete Datenpfad hoch skalierbar.

Unkomprimierte Bildelementdaten werden über eine serielle Hochgeschwindigkeitsverbindung übertragen, die eine STP- bzw. Shielded-Twiested-Pair-Verkabelung verwendet.

Weiterhin sind ein Hinkanal für das Übertragen der Bildelementdaten und Steuerdaten und ein Rückkanal für das Übertragen von Steuerdaten vorgesehen. Es wird eine bidirektionale asymmetrische Verbindung über ein Paar oder zwei Paare eines STP-Kabels gebildet. Die Verbindung unterstützt eine Entfernung von bis zu 35 m.

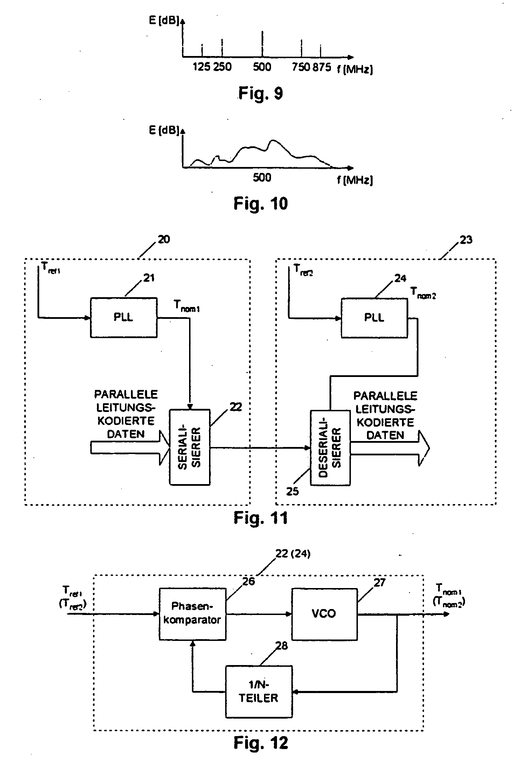

Fig. 11 zeigt die wesentliche Struktur einer Übertragungsvorrichtung im Stand der Technik.

Wie es in dieser Figur gezeigt ist, weist die Übertragungsvorrichtung einen Sender 20 und einen Empfänger 23 auf. Der Sender 20 weist weiterhin eine erste Phasenregelschleife bzw. PLL 21 und einen Serialisierer 22 auf und der Empfänger 23 weist weiterhin eine zweite Phasenregelschleife 24 und einen Deserialisierer 25 auf.

Die erste Phasenregelschleife 21 erzeugt aus einem ersten Grundtaktsignal T_{ref1} ein erstes Taktsignal Tₙₒₘ₁, das ein Vielfaches der Frequenz des ersten Grundtaktsignals T_{ref1} und die gleiche Phase wie das erste Grundtaktsignal T_{ref1} aufweist. Dieses erste Taktsignal Tₙₒₘ₁ wird zu dem Serialisierer 22 gesendet. Der Serialisierer 22 empfängt an einem Eingang von ihm parallele leitungskodierte Daten und wandelt diese zu einem seriellen Datensignal, das synchron zu dem ersten Taktsignal Tₙₒₘ₁ zu dem Empfänger 23 gesendet wird.

Der Deserialisierer 25 des Empfängers 23 empfängt das von dem Sender 20 gesendete serielle Datensignal. Die zweite Phasenregelschleife 24 erzeugt aus einem zweiten Grundtaktsignal T_{ref2} ein zweites Taktsignal Tₙₒₘ₂, das ein Vielfaches der Frequenz des zweiten Grundtaktsignals T_{ref2} und die gleiche Phase wie das zweite Grundtaktsignal T_{ref2} aufweist. Dieses zweite Taktsignal Tₙₒₘ₂ wird zu dem Deserialisierer 25 gesendet. Der Deserialisierer 25 empfängt an einem Eingang von ihm das serielle Datensignal und wandelt dieses zu parallelen leitungskodierten Daten, die aus dem Empfänger 23 ausgegeben wird.

Fig. 12 zeigt eine in dem Sender 20 und Empfänger 23 der Übertragungsvorrichtung im Stand der Technik verwendete erste bzw. zweite Phasenregelschleife 22 bzw. 24.

Wie es in dieser Figur gezeigt ist, weist die erste bzw. zweite Phasenregelschleife 22 bzw. 24 einen Phasenkomparator 26, einen spannungsgesteuerten Oszillator bzw. VCO 27 und einen 1/N-Teiler 28 auf.

An einem Eingang des Phasenkomparators 26 wird ein erstes Grundtaktsignal T_{ref1} für den Sender 20 bzw. ein zweites Grundtaktsignal T_{ref2} für den Empfänger 23 empfangen. Das Ausgangssignal des Phasenkomparators 26 wird zu dem spannungsgesteuerten Oszillator 27 gesendet. Das Ausgangssignal des spannungsgesteuerten Oszillators 27 wird dann aus der ersten bzw. zweiten Phasenregelschleife 22 bzw. 24 ausgegeben und wird gleichzeitig über den 1/N-Teiler, der zwischen dem Ausgang und einem anderen Eingang der ersten bzw. zweiten Phasenregelschleife 22 bzw. 24 angeschlossen ist, zurückgekoppelt. Auf diese Weise werden an dem Ausgang der ersten bzw. zweiten Phasenregelschleife 22 bzw. 24 ein erstes bzw. zweites Taktsignal Tₙₒₘ₁ bzw. Tₙₒₘ₂ erzielt, die die gleiche Phase wie das erste bzw. zweite Grundtaktsignal T_{ref1} bzw. T_{ref2} und eine Frequenz aufweisen, die das 1/Nfache der Frequenz des ersten bzw. zweiten Taktsignals Tₙₒₘ₁ bzw. Tₙₒₘ₂ ist.

Das erste Taktsignal Tₙₒₘ₁ wird dann dazu verwendet, das serielle Datensignal, das von dem Serialisierer 22 aus den parallelen leitungskodierten Daten erzeugt wird, synchron zu dem ersten Taktsignal T_{ref1} zu dem Deserialisierer 25 des Empfängers 23 zu senden, bei dem es synchron zu dem zweiten Taktsignal T_{ref2} abgetastet wird und wieder zu parallelen leitungskodierten Daten gewandelt wird. Diese parallelen leitungskodierten Daten werden dann für eine weitere Verarbeitung aus dem Empfänger 23 ausgegeben.

Jedoch weist diese Technologie zwei wesentliche Nachteile auf. Der erste Nachteil besteht darin, dass es zum seriellen Übertragen der Daten erforderlich ist, das bei dem Sender 20 und bei dem Empfänger 23 erste und zweite Grundtaktsignale T_{ref1} bzw. T_{ref2} verwendet werden, die die gleiche Frequenz und Phase aufweisen, also zueinander synchron sind. Dies erfordert es, dass auf dem Übertragungsweg entweder eine Taktinformation zu dem Empfänger 23 gesendet wird, um den Takt auf der Seite des Empfängers 23 zu dem Takt auf der Seite des Senders 20 zu synchronisieren, oder dass eine entsprechende Taktinformation auf irgendeine andere Weise aus den zu dem Empfänger gesendeten seriellen Daten abgeleitet werden muss. Deshalb ist es bisher als notwendig erachtet worden, den Takt bei der seriellen Übertragung möglichst ohne jeden Jitter so stabil wie möglich zu halten.

Der zweite Nachteil besteht darin, dass diese Technologie Frequenzen bis zum einem Bereich von 1 GHz verwendet. Da ein Kabel unter Berücksichtigung von jeweiligen Standorten des Senders 20 und des Empfängers 23 in dem Kraftfahrzeug verlegt werden muss, ist es schwierig, dieses Kabel vollständig elektromagnetisch von der Umgebung in dem Kraftfahrzeug abzuschirmen. Dadurch kann verursacht werden, dass elektromagnetische Wellen, die von anderen elektrischen oder elektronischen Komponenten in dem Kraftfahrzeug abgegeben werden, als elektromagnetische Störungen in das Kabel eingekoppelt werden, was die elektromagnetische Verträglichkeit bzw. EMV verringert.

Eine Vorrichtung und ein Verfahren zu seriellen Übertragen von Daten unter Verwendung eines Spreizspektrums zum Erhöhen der elektromagnetischen Verträglichkeit gemäß dem Oberbegriff des Anspruchs 1 bzw. des Oberbegriffs des Anspruchs 12 sind aus der US-A-5 894 517 bzw. der EP-A-0 823 801 bekannt.

Eine Vorrichtung und ein Verfahren zu parallelen Übertragen von Daten unter Verwendung eines Spreizspektrums zum Erhöhen der elektromagnetischen Verträglichkeit, die ansonsten alle anderen Merkmale des Oberbegriffs des Anspruchs 1 bzw. des Oberbegriffs des Anspruchs 12 aufweisen, sind aus der WO 99/38281 bekannt.

### Offenbarung der Erfindung

Es ist demgemäss die Aufgabe der vorliegenden Erfindung, die vorhergehend genannten Nachteile zu beseitigen und eine Vorrichtung und ein Verfahren zum seriellen Übertragen zu schaffen, die die elektromagnetische Verträglichkeit hinsichtlich der externen Umgebung verbessern können.

Diese Aufgabe wird hinsichtlich der Vorrichtung mit den in Anspruch 1 angegebenen Maßnahmen und hinsichtlich des Verfahrens mit den in Anspruch 12 angegebenen Maßnahmen gelöst.

Weitere vorteilhafte Ausgestaltungen der vorliegenden Erfindung sind Gegenstand der abhängigen Ansprüche.

Gemäß dem Gegenstand der Ansprüche 1 und 12 wird der Vorteil erzielt, dass durch das Anwenden der Spreizspektrummodulation zum Erzeugen des gewobbelten ersten Taktsignals und das anschließende Senden des seriellen Datensignals synchron zu diesem gewobbelten seriellen Datensignals eine Spitze im Frequenzspektrum des gewobbelten seriellen Datensignals stark verringert werden kann, so dass eine elektromagnetische Störung aufgrund einer großen Spitze im Frequenzspektrum verringert werden kann und folglich die elektromagnetische Verträglichkeit von anderen elektrischen und elektronischen Komponenten in einem Kraftfahrzeug sichergestellt werden kann.

Weiterhin wird gemäß dem Gegenstand der Ansprüche 1 und 12 der Vorteil erzielt, dass durch Takt- und Datenwiedergewinnung des gesendeten seriellen Datensignals auf der Seite des Empfängers keine Information bezüglich des Taktsignals von der Seite des Senders zu der Seite des Empfängers nachgezogen werden muss, um das Datensignal zweckmäßig abtasten und somit erfassen zu können.

### Kurze Beschreibung der Zeichnungen

Die vorliegende Erfindung wird nachstehend anhand eines Ausführungsbeispiels unter Bezugnahme auf die beiliegende Zeichnung näher erläutert.

Es zeigt:

Fig. 1 die wesentliche Struktur einer Übertragungsvorrichtung gemäß einem Ausführungsbeispiel der vorliegenden Erfindung.

Fig. 2 eine in einem Sender der Übertragungsvorrichtung gemäß dem Ausführungsbeispiel der vorliegenden Erfindung verwendete erste Phasenegelschleife;

Fig. 3 eine in einem Empfänger der Übertragungsvorrichtung gemäß dem Ausführungsbeispiel der vorliegenden Erfindung verwendete zweite Phasenregelschleife;

Fig. 4 eine schematische Darstellung des von der Übertragungsvorrichtung gemäß dem Ausführungsbeispiel der vorliegenden Erfindung verwendeten Frequenzbereichs;

Fig. 5 eine schematische Darstellung eines von dem Sender der Übertragungsvorrichtung gemäß dem Ausführungsbeispiel der vorliegenden Erfindung zu sendenden Datensignals;

Fig. 6 eine schematische Darstellung eines Frequenzbereichs des von dem Sender der Übertragungsvorrichtung gemäß dem Ausführungsbeispiel der vorliegenden Erfindung zu sendenden Datensignals in Fig. 5 ohne Verwendung eines Spreizspektrums;

Fig. 7 eine schematische Darstellung eines Frequenzbereichs des von dem Sender der Übertragungsvorrichtung gemäß dem Ausführungsbeispiel der vorliegenden Erfindung zu sendenden Datensignals in Fig. 5 unter Verwendung eines Spreizspektrums;

Fig. 8 eine schematische Darstellung eines von dem Sender der Übertragungsvorrichtung gemäß dem Ausführungsbeispiel der vorliegenden Erfindung zu sendenden Datensignals unter Verwendung eines Verschlüsselungsverfahrens;

Fig. 9 eine schematische Darstellung eines Frequenzbereichs des von dem Sender der Übertragungsvorrichtung gemäß dem Ausführungsbeispiel der vorliegenden Erfindung zu sendenden Datensignals in Fig. 8 ohne Verwendung eines Spreizspektrums;

Fig. 10 eine schematische Darstellung eines Frequenzbereichs des von dem Sender der Übertragungsvorrichtung gemäß dem Ausführungsbeispiel der vorliegenden Erfindung zu sendenden Datensignals in Fig. 8 unter Verwendung eines Spreizspektrums;

Fig. 11 die wesentliche Struktur einer Übertragungsvorrichtung im Stand der Technik; und

Fig. 12 eine in einem Sender und Empfänger der Übertragungsvorrichtung im Stand der Technik verwendete Phasenregelschleife. Beste Ausführungsform der Erfindung

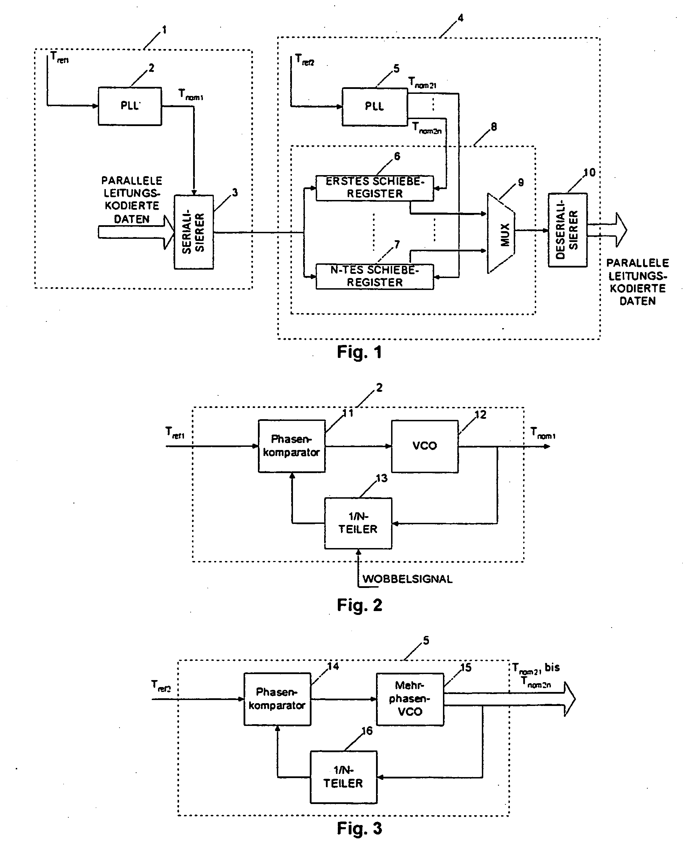

Fig. 1 zeigt die wesentliche Struktur einer Übertragungsvorrichtung gemäß einem Ausführungsbeispiel der vorliegenden Erfindung.

In Fig. 1 bezeichnet das Bezugszeichen 1 einen Sender. Der Sender 1 weist eine erste Phasenregelschleife 2 und einen Serialisierer 3 auf. Das Bezugszeichen 4 bezeichnet einen Empfänger. Der Empfänger 4 weist eine zweite Phasenregelschleife 5, eine blind überabtastende Takt- und Datenwiedergewinnungseinheit bzw. CDR 8, einen Multiplexer bzw. MUX 9 und einen Deseralisierer 10 auf. Die blind überabtastende CDR 8 weist weiterhin ein erstes Schieberegister 6, ein n-tes Schieberegister 7 und einen Multiplexer bzw. MUX 9 auf. Obgleich es in Fig. 1 nicht gezeigt ist, weist die blind überabtastende CDR 8 weiterhin zweite bis (n-1)-te Schieberegister auf.

Nachstehend erfolgt die Beschreibung des Aufbaus der in Fig. 1 gezeigten Übertragungsvorrichtung.

Wie es in Fig. 1 gezeigt ist, empfängt die erste Phasenregelschleife 1 ein erstes Grundtaktsignal T_{ref1} einer vorbestimmten Frequenz und einer vorbestimmten Phase. Ein Ausgang der ersten Phasenregelschleife 1 ist mit einem Takteingang des Serialisierers 2 verbunden. Ein Eingang des Serialisierers 2 empfängt parallele leitungskodierte Daten. Ein Ausgang des Serialisierers 2 ist mit einem Eingang der Takt- und Datenwiedergewinnungseinheit 8 verbunden. Genauer gesagt ist ein jeweiliger Eingang eines jeweiligen der ersten bis n-ten Schieberegister 6, 7 mit dem Ausgang des Serialisierers 3 verbunden.

Weiterhin empfängt die zweite Phasenregelschleife 5 ein zweites Grundtaktsignal T_{ref2} einer vorbestimmten Frequenz und einer vorbestimmten Phase. Jeweilige der n Ausgänge der zweiten Phasenregelschleife 5 sind mit jeweiligen von Takteingängen der ersten bis n-ten Schieberegister 6, 7 verbunden. Ausgänge der ersten bis n-ten Schieberegister 6, 7 sind mit jeweiligen Eingängen des Multiplexers 9 verbunden. Ein Ausgang des Multiplexers 9 ist mit einem Eingang des Deserialisierers 10 verbunden.

Fig. 2 zeigt eine in dem Sender 1 der Übertragungsvorrichtung gemäß dem Ausführungsbeispiel der vorliegenden Erfindung verwendete erste Phasenegelschleife 2.

In Fig. 2 bezeichnet das Bezugszeichen 11 einen ersten Phasenkomparator, bezeichnet das Bezugszeichen 12 einen ersten spannungsgesteuerten Oszillator und bezeichnet das Bezugszeichen 13 einen ersten 1/n-Teiler.

Nachstehend erfolgt die Beschreibung eines Aufbaus der in Fig. 2 gezeigten ersten Phasenregelschleife 2.

Wie es in Fig. 2 gezeigt ist, empfängt der erste Phasenkomparator 11 das erste Grundtaktsignal T_{ref1}. Ein Ausgang des ersten Phasenkomparators 11 ist mit einem Eingang des ersten spannungsgesteuerten Oszillators 12 verbunden. Der Ausgang des ersten spannungsgesteuerten Oszillators 12 ist mit dem Ausgang der ersten Phasenregelschleife 2 verbunden. Weiterhin ist der Ausgang des ersten spannungsgesteuerten Oszillators 12 mit einem Eingang des ersten 1/n-Teilers 13 verbunden. Weiterhin empfängt der erste 1/n-Teiler 13 ein Wobbelsignal an einem Programmierungseingang. Ein Ausgang des ersten 1/n-Teilers 13 ist mit einem anderen Eingang des ersten Phasenkomparators 11 verbunden. Auf diese Weise wird in der ersten Phasenregelschleife 2 ein Rückkopplungspfad ausgebildet.

Fig. 3 zeigt eine in dem Empfänger 4 der Übertragungsvorrichtung gemäß dem Ausführungsbeispiel der vorliegenden Erfindung verwendete zweite Phasenegelschleife 5.

In Fig. 3 bezeichnet das Bezugszeichen 14 einen zweiten Phasenkomparator, bezeichnet das Bezugszeichen 15 einen zweiten spannungsgesteuerten Oszillator für mehrere Phasen bzw. Mehrphasen-VCO und bezeichnet das Bezugszeichen 13 einen ersten 1/n-Teiler.

Nachstehend erfolgt die Beschreibung eines Aufbaus der in Fig. 3 gezeigten zweiten Phasenregelschleife 5.

Wie es in Fig. 3 gezeigt ist, empfängt der zweite Phasenkomparator 14 das zweite Grundtaktsignal T_{ref2}. Ein Ausgang des zweiten Phasenkomparators 14 ist mit einem Eingang des zweiten spannungsgesteuerten Oszillators 15 für mehrere Phasen verbunden. Jeweilige Ausgänge des zweiten spannungsgesteuerten Oszillators 15 für mehrere Phasen sind mit jeweiligen Ausgängen der zweiten Phasenregelschleife 5 verbunden. Weiterhin ist einer der Ausgänge des zweiten spannungsgesteuerten Oszillators 15 für mehrere Phasen mit einem Eingang des zweiten 1/n-Teilers 16 verbunden. Ein Ausgang des zweiten 1/n-Teilers 16 ist mit einem anderen Eingang des zweiten Phasenkomparators 14 verbunden. Auf diese Weise wird in der zweiten Phasenregelschleife 5 ein Rückkopplungspfad ausgebildet.

Nachstehend erfolgt die Beschreibung der Funktionsweise des Ausführungsbeispiels der vorliegenden Erfindung.

Wie es zuvor beschrieben worden ist, empfängt die erste Phasenregelschleife 2 das erste Grundtaktsignal T_{ref1}, das extern erzeugt wird. Genauer gesagt empfängt der erste Phasenkomparator 11 das erste Grundtaktsignal T_{ref1} an einem seiner Eingänge und empfängt an einem anderen seiner Eingänge ein Signal, das über den ersten 1/n-Teiler 13 von dem Ausgang der ersten Phasenregelschleife 2 zu dem Eingang der ersten Phasenregelschleife 2 zurückgekoppelt wird. Dieser Signal weist eine Frequenz auf, die gleich dem 1/n-fachen der ersten Grundtaktsignals T_{ref1} ist. Aufgrund dieser Rückkopplung wird an dem Ausgang der ersten Phasenregelschleife 2 ein erstes Taktsignal Tₙₒₘ₁ ausgegeben, das eine Frequenz aufweist, die aus der Frequenz des ersten Grundtaktsignals T_{ref1} abgeleitet ist, und eine Phase aufweist, die gleich der Phase des ersten Grundtaktsignals T_{ref1} ist. Genauer gesagt ist die Frequenz des ersten Taktsignals Tₙₒₘ₁ gleich dem n-fachen der Frequenz des ersten Grundtaktsignals T_{ref1}. n ist dabei eine beliebige reelle Zahl größer 0, die für eine jeweils vorliegende Anwendung zweckmäßig festgelegt wird. Weiterhin empfängt der Programmierungseingang des ersten 1/n-Teilers 13 ein Wobbelsignal, das zum Programmieren eines Teilerverhältnisses des ersten 1 /n-Teilers 13 verwendet wird.

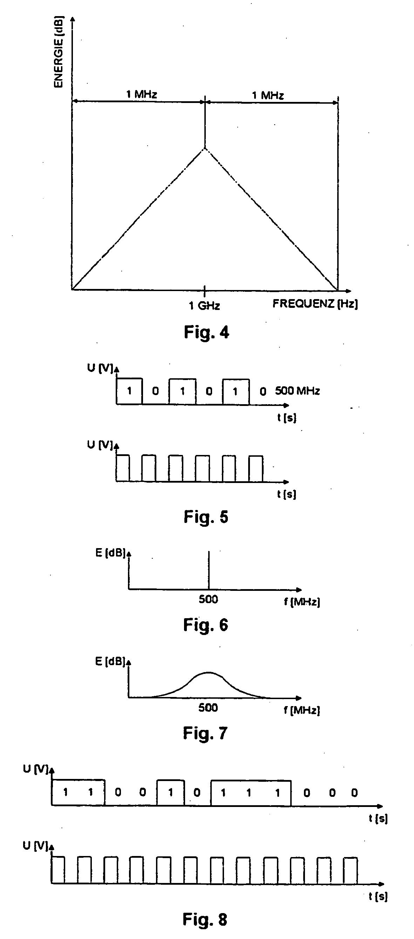

Fig. 4 zeigt eine schematische Darstellung des von der Übertragungsvorrichtung gemäß dem Ausführungsbeispiel der vorliegenden Erfindung verwendeten Frequenzbereichs. Genauer gesagt zeigt Fig. 4 den Bereich innerhalb welchem das erste Taktsignal Tₙₒₘ₁ gewobbelt wird. Das erste Taktsignal weist eine Frequenz von fₙₒₘ₁ = 1 GHz auf und wird mit einem kleinen Frequenzhub von f_{mod1} = ± 1 MHz mit reiner schnellen Geschwindigkeitsänderung des Frequenzhubs von f_{Fm1} = 2,6 kHz geändert. Dieses Wobbeln wird durch Anlegen eines zweckmäßigen Wobbelsignals an den Programmierungseingang des ersten 1/n-Teilers 13 durchgeführt. Obgleich das Wobbeln in diesem Ausführungsbeispiel der vorliegenden Erfindung möglichst schnell mit einem kleinen Frequenzhub mit den zuvor angegebenen Werten durchgeführt wird, können je nach der vorliegenden Anwendung zweckmäßige Werte für das Wobbeln ausgewählt werden. Durch das zuvor genannte Wobbeln wird das serielle Datensignal, das auf dem Übertragungsweg zwischen dem Sender 1 und dem Empfänger 4 übertragen wird, einer Spreizspektrummodulation unterzogen, wie es nachstehend beschrieben wird.

Fig. 5 zeigt eine schematische Darstellung eines von dem Sender 1 der Übertragungsvorrichtung gemäß dem Ausführungsbeispiel der vorliegenden Erfindung zu sendenden Datensignals.

Es wird hier angenommen, dass das zu sendende Datensignal aus einer ständig wechselnden Folge von "1" und "0" besteht. Die obere Darstellung in Fig. 5 stellt das serielle Datensignal auf dem Übertragungsweg zwischen dem Sender 1 und Empfänger 4 ohne den Einfluss des Wobbelsignals dar und die untere Darstellung stellt das erste Taktsignal Tₙₒₘ₁ von 1 GHz ohne den Einfluss des Wobbelsignals dar. Da die parallelen leitungskodierten Daten, die in den Serialisierer 3 eingegeben werden, synchron zu der Frequenz des ersten Taktsignals Tₙₒₘ₁ von 1 GHz zu der Takt- und Datenwidergewinnungseinheit 8 gesendet werden, wird in diesem Fall auf dem Übertragungsweg zwischen dem Sender 1 und dem Empfänger 4 ein serielles Datensignal einer Frequenz von 500 MHz übertragen.

Fig. 6 zeigt eine schematische Darstellung eines Frequenzbereichs des von dem Sender 1 der Übertragungsvorrichtung gemäß dem Ausführungsbeispiel der vorliegenden Erfindung zu sendenden Datensignals in Fig. 5 ohne Verwendung eines Spreizspektrums.

Das heißt, dass in Fig. 6 der Frequenzbereich des zu sendenden Datensignals ohne den Einfluss des Wobbelsignals dargestellt ist. Wie es in Fig. 6 gezeigt ist, ergibt sich aufgrund der Übertragung der ständig wechselnden Folge von "1" und "0" auf dem Übertragungsweg zwischen dem Sender 1 und dem Empfänger 4 ein Extremfall, bei dem bei 500 MHz eine große Spitze der Amplitude vorhanden ist und im Idealfall keine andere Frequenzkomponente vorhanden ist.

Da der Übertragungsweg zwischen dem Sender 1 und dem Empfänger 4 in einem Kraftfahrzeug im allgemeinen den Umständen entsprechend durch ein Kabel, wie zum Beispiel ein STP- bzw. Shielded-Twisted-Pair-Kabel ausgebildet werden muss, ist das Kabel einer elektromagnetischen Störung von anderen elektrischen und elektronischen Komponenten in dem Fahrzeug sowie anderen elektromagnetischen Störungen von außerhalb des Kraftfahrzeugs ausgesetzt, da es nicht vollständig elektromagnetisch abgeschirmt werden kann. Aufgrund der hohen Frequenz des seriellen Datensignals auf dem Übertragungsweg von 500 MHz würde sehr leicht die Möglichkeit bestehen, dass eine in den Übertragungsweg eingekoppelte elektromagnetische Störung das serielle Datensignal beeinträchtigt bzw. stört. Um dies zu vermeiden, wird das zuvor erwähnte Wobbeln durchgeführt, um das serielle Datensignal einer Spreizspektrummodulation zu unterziehen, wie es nachstehend erläutert wird.

Fig. 7 zeigt eine schematische Darstellung eines Frequenzbereichs des von dem Sender 1 der Übertragungsvorrichtung gemäß dem Ausführungsbeispiel der vorliegenden Erfindung zu sendenden Datensignals in Fig. 5 unter Verwendung eines Spreizspektrums.

Durch das Wobbeln, das an dem ersten 1/n-Teiler 13 durchgeführt wird, wird das Spektrum des sich auf dem Übertragungsweg zwischen dem Sender 1 und dem Empfänger 4 befindenden seriellen Datensignals derart geändert, dass die Spitze bei 500 MHz in Fig. 6 "verschmiert" wird, wie es in Fig. 7 gezeigt ist. Es ist anzumerken, dass die Figuren 6 und 7 bezüglich der Amplitude U(V) nicht maßstabsgetreu sind. Vielmehr wird durch die durch das Wobbeln durchgeführte Spreizspektrummodulation die Spitze um Zehnerpotenzen nach unten gezogen und die Leistung in einem größeren Frequenzbereich verteilt, wie es in Fig. 7 gezeigt ist. Aufgrund dieser Spreizspektrummodulation und der sich daraus ergebenden Verringerung der Spitze im Frequenzbereich des seriellen Datensignals erhöht sich die elektromagnetische Verträglichkeit hinsichtlich des Übertragungswegs zwischen dem Sender 1 und dem Empfänger 4.

Fig. 8 zeigt eine schematische Darstellung eines von dem Sender 1 der Übertragungsvorrichtung gemäß dem Ausführungsbeispiel der vorliegenden Erfindung zu sendenden Datensignals unter Verwendung eines Verschlüsselungsverfahrens.

Zusätzlich zu der zuvor erwähnten Spreizspektrummodulation kann das serielle Datensignal einem Verschlüsselungsverfahren unterzogen werden, um die Amplitude an der Spitze des Frequenzbereichs weiter zu verringern. Derartige Verschlüsselungsverfahren sind im Stand der Technik bekannt und werden hier nicht im Detail erläutert. Jedoch ist anzumerken, dass sich durch stärkeres Verschlüsseln mehr Overhead in dem seriellen Datensignal ergibt, wodurch eine größere Bandbreite für das serielle Datensignal erforderlich ist und folglich eine Frequenzerhöhung verursacht wird.

Fig. 9 zeigt eine schematische Darstellung eines Frequenzbereichs des von dem Sender 1 der Übertragungsvorrichtung gemäß dem Ausführungsbeispiel der vorliegenden Erfindung zu sendenden Datensignals in Fig. 8 ohne Verwendung eines Spreizspektrums.

Bei diesem Verschlüsseln bzw. Scrambling wird das in Fig. 5 gezeigte serielle Datensignal derart gewandelt, dass zum Beispiel aus der ständigen Folge von "1" und "0" eine andere Folge erzeugt wird, die im Frequenzbereich nicht nur eine einzige Spitze bei der Frequenz von 500 MHz aufweist, sondern ein Frequenzspektrum aufweist, welches mehrere Spitzen aufweist, die um positive und negative ganzzahlige Teile der Frequenz des unverschlüsselten seriellen Datensignals von 500 MHz um diese angeordnet sind, wie es in Fig. 9 gezeigt ist, wobei in Fig. 9 die durch das Wobbeln verursachte Spreizspektrummodulation vernachlässigt ist.

Fig. 10 zeigt eine schematische Darstellung eines Frequenzbereichs des von dem Sender 1 der Übertragungsvorrichtung gemäß dem Ausführungsbeispiel der vorliegenden Erfindung zu sendenden Datensignals in Fig. 8 unter Verwendung eines Spreizspektrums.

Wenn nunmehr die durch das Wobbeln durchgeführte Spreizspektrummodulation berücksichtigt wird, kann das in Fig. 9 gezeigte, mehrere Spitzen aufweisende Frequenzspektrum ähnlich dem Frequenzspektrum "verschmiert" werden, das in Fig. 7 gezeigt ist, um ähnliche Vorteile zu erzielen, wie sie zuvor bezüglich dem Frequenzspektrum beschrieben worden sind. Weiterhin ist anzumerken, dass aufgrund der mehreren Spitzen im Frequenzspektrum des verschlüsslten seriellen Datensignals in Fig. 9 das aufgrund des Wobbelns entstehende "verschmierten" seriellen Datensignals über einen größeren Frequenzbereich als das unverschlüsselte "verschmierte" serielle Datensignal vorhanden ist, das in Fig. 7 gezeigt ist.

Es ist jedoch anzumerken, dass das zuvor beschriebene Verschlüsseln des seriellen Datensignals optional ist und je nach vorliegendem Anwendungszweck angewendet werden kann oder nicht, wobei die Vorteile des Verschlüsselns, das heißt das Vermeiden der einzigen Spitze bei einer hohen Frequenz, und dessen Nachteile, das heißt Overhead, größere Bandbreite, Erhöhung der Frequenz, an den vorliegenden Anwendungszweck zu berücksichtigen sind.

Es wird erneut auf Fig. 1 verwiesen. Das sich wie zuvor beschrieben ergebende unverschlüsselte oder verschlüsselte serielle Datensignal wird dann synchron zu dem ersten Taktsignal Tₙₒₘ₁ über den Übertragungsweg zwischen dem Sender 1 und dem Empfänger 4 zu der blind überabtastenden Takt- und Datenwiedergewinnungseinheit 8 gesendet. Genauer gesagt wird das serielle Datensignal an jedem jeweiligen Eingang des ersten bis n-ten Schieberegisters 6, 7 empfangen.

Wie es zuvor beschrieben worden ist, empfängt die zweite Phasenregelschleife 2 das zweite Grundtaktsignal T_{ref2}, das die gleiche Frequenz wie das erste Grundtaktsignal T_{ref1} aufweist, dessen Phase jedoch keine vorbestimmte Beziehung zu der Phase des ersten Grundtaktsignals T_{ref1} aufweist. Genauer gesagt empfängt der zweite Phasenkomparator 14 das zweite Grundtaktsignal T_{ref2} an einem seiner Eingänge und empfängt an einem anderen seiner Eingänge ein Signal, das über den zweiten 1/n-Teiler 16 von einem Ausgang der zweiten Phasenregelschleife 5 zu dem Eingang der zweiten Phasenregelschleife 5 zurückgekoppelt wird. Dieses Signal weist eine Frequenz auf, die gleich dem 1/n-fachen des zweiten Grundtaktsignals T_{ref2} ist. Aufgrund dieser Rückkopplung werden an jeweiligen Ausgängen der zweiten Phasenregelschleife 5 jeweilige zweite Taktsignale Tₙₒₘ₂₁ bis Tₙₒₘ₂ₙ ausgegeben, die jeweils eine Frequenz aufweisen, die aus der Frequenz des zweiten Grundtaktsignals T_{ref2} abgeleitet ist, und eine Phase aufweisen, die gleich der Phase des zweiten Grundtaktsignals T_{ref2} ist. Genauer gesagt ist die Frequenz der zweiten Taktsignale Tₙₒₘ₂₁ Tₙₒₘ₂ₙ gleich dem n-fachen der Frequenz des zweiten Grundtaktsignals T_{ref2}. n ist dabei eine beliebige reelle Zahl größer 0, die für eine jeweils vorliegende Anwendung zweckmäßig festgelegt wird und nicht dem Wert von n des ersten 1/n-Teilers 13 entsprechen muss.

Zum Beispiel können als die zweiten Taktsignale Tₙₒₘ₂₁ bis Tₙₒₘ₂ₙ 8 zweite Taktsignale Tₙₒₘ₂₁ bis Tₙₒₘ₂₈ aus der zweiten Phasenregelschleife 5 ausgegeben werden und an jeweiligen Eingänge von ersten bis achten Schieberegistern 6, 7 empfangen werden. Um ein ausreichendes blindes Überabtasten sicherzustellen, wird in diesem Fall die Frequenz der ersten bis achten zweiten Taktsignale Tₙₒₘ₂₁ bis Tₙₒₘ₂₈ zum Beispiel gleich der Frequenz des ersten Taktsignals, das heißt 1 GHz, festgelegt. Die derart erzeugten zweiten Taktsignale Tₙₒₘ₂₁ bis T_{nom2n,} die aufgrund eines gleichen Teilerverhältnisses n des zweiten 1/n-Zählers die gleiche Frequenz, aber zueinander unterschiedliche Phasen mit zum Beispiel einer Differenz von 45° aufweisen, werden an jeweiligen Takteingängen der jeweiligen ersten bis achten Schieberegister 6, 7 empfangen und führen dazu, dass das gesendete serielle Datensignal zu jedem Zeitpunkt eines Auftretens eines Taktpulses eines jeweiligen der ersten bis achten zweiten Taktsignale Tₙₒₘ₂₁ bis Tₙₒₘ₂₈ abgetastet und in ein jeweiliges der ersten bis achten Schieberegister 6, 7 geschrieben wird. Die ersten bis achten Schieberegister 6, 7 können zum Beispiel aus Ringoszillatoren für zehn Bit aufgebaut sein und jeweils zehn Bit speichern, die zu zehn Abtastzeitpunkten jedes jeweiligen der ersten bis achten zweiten Taktsignale Tₙₒₘ₂₁ bis Tₙₒₘ₂₈ abgetastet worden sind. Aus den jeweils acht einander entsprechenden, aber zu unterschiedlichen Abtastzeitpunkten mit den ersten bis achten zweiten Taktsignalen Tₙₒₘ₂₁ bis Tₙₒₘ₂₈ abgetasteten Bits des gesendeten seriellen Datensignals wird dasjenige Bit mittels einer nicht gezeigten Logik als das zuverlässigste Bit herausgesucht, das vorbestimmte Bedingungen erfüllt.

Das blinde Überabtasten kann zum Beispiel derart durchgeführt werden, dass das serielle Datensignal, das synchron zu dem ersten Taktsignal Tₙₒₘ₁ erzeugt worden ist, mit einem der zweiten Taktsignale Tₙₒₘ₂₁ bis Tₙₒₘ₂₈ abgetastet wird. Die zweiten Taktsignale Tₙₒₘ₂₁ bis Tₙₒₘ₂₈ sind derart ausgestaltet, dass sie zulassen, dass eine Periode des seriellen Datensignals mehrfach abgetastet wird, das heißt ein Oversampling durchgeführt wird. Zu diesem Zweck kann die Frequenz der zweiten Taktsignale Tₙₒₘ₂₁ bis Tₙₒₘ₂₈ gleich der Frequenz des ersten Taktsignals Tₙₒₘ₁ gewählt werden, wie es zuvor beschrieben worden ist, wobei in diesem Fall die zweiten Taktsignale Tₙₒₘ₂₁ bis Tₙₒₘ₂₈ zueinander um einen festen Phasenbetrag verschoben sind.

Ferner kann bei einer anderen Ausgestaltung die Frequenz eines einzelnen zweiten Taktsignals um ein Vielfaches höher als die Frequenz des ersten Taktsignals Tₙₒₘ₁ gewählt werden.

Obgleich gemäß dem Ausführungsbeispiel der vorliegenden Erfindung zur Takt- und Datenwiedergewinnung das blinde Überabtasten verwendet wird, ist dies nur eine Möglichkeit und es können verschiedene Verfahren zur Takt- und Datenwiedergewinnung, wie zum Beispiel eine analoge PLLbasierte Takt- und Datenwiedergewinnung, ein blindes Überabtasten mit oder ohne Taktsynthese, ein blindes Überabtasten mit einem analogen spannungsgesteuerten Oszillator, eine Takt- und Datenwiedergewinnung mit einer Bang-Bang-Architektur eine Takt- und Datenwiedergewinnung mit einem linearen Phasendetektor usw. verwendet werden.

Das zuverlässigste Bit der jeweils acht einander entsprechenden, aber zu unterschiedlichen Abtastzeitpunkten mit den ersten bis achten zweiten Taktsignalen Tₙₒₘ₂₁ bis Tₙₒₘ₂₈ abgetasteten Bits des gesendeten seriellen Datensignals wird von dem Multiplexer 9 ausgegeben. Der Multiplexer 9 wird hierbei derart von der nicht gezeigten Logik gesteuert, dass er den Eingang auswählt, der dem zuverlässigsten Bit entspricht. Das ausgegebene Bit wird dann dem Deserialisier 10 zugeführt, um die parallelen leitungskodierten Daten wiederzugewinnen. Es ist anzumerken, dass sowohl der Multiplexer 9 als auch der Deserialisierer synchron zu einem der zweiten Taktsignale Tₙₒₘ₂₁ bis Tₙₒₘ₂₈ arbeiten, wobei beide das gleiche der zweiten Taktsignale Tₙₒₘ₁ bis Tₙₒₘ₂ verwenden, um synchron zueinander zu arbeiten. Die derart widergewonnenen leitungskodierten Daten können im Anschluss aus dem Empfänger ausgegeben werden und einer weiteren Verarbeitung unterzogen werden.

## Patentansprüche

1. Vorrichtung zum seriellen Übertragen von Daten unter Verwendung eines Spreizspektrums zum Erhöhen der elektromagnetischen Verträglichkeit, wobei die Vorrichtung aufweist:
einen Sender (1) zum Unterziehen eines eine vorbestimmte Frequenz und eine vorbestimmte Phase aufweisenden Taktsignals (Tₙₒₘ₁) einer Spreizspektrummodulation und zum Senden eines seriellen Datensignals; und
einen Empfänger (4) zum Empfangen des von dem Sender (1) gesendeten seriellen Datensignals unter Verwendung einer Takt- und Datenwiedergewinnung und zum Ausgeben von mindestens einem eines rückgewonnenen Taktsignals und von rückgewonnen Daten,
wobei
der Sender (1) die Spreizspektrummodulation durch Wobbeln des Taktsignals (Tₙₒₘ₁) innerhalb eines vorbestimmten Frequenzbereichs durchführt und das Senden des seriellen Datensignals synchron zu dem gewobbelten Taktsignal (Tₙₒₘ₁) durchführt,
***dadurch gekennzeichnet, dass***
die Takt- und Datenrückgewinnung derart von dem Empfänger (4) durchgeführt wird, dass der Empfänger (4) das von dem Sender (1) gesendete serielle Datensignal derart mit mehreren zweiten Taktsignalen (Tnom₂₁ bis Tₙₒₘ₂ₙ) abtastet, dass mehrere blind überabgetastete serielle Datensignale erzielt werden, wobei ein am besten geeignetes der mehreren blind überabgetasteten seriellen Datensignale anhand eines vorbestimmten Algorithmus synchron zu einem vorbestimmten der zweiten Taktsignale (Tnom₂₁ bis Tnom₂ₙ) ausgegeben wird, wobei die zweiten Taktsignale (Tnom₂₁ bis Tnom₂ₙ) die gleiche vorbestimmte Frequenz wie das erste Taktsignal (Tnom₁) und zueinander unterschiedliche Phasen aufweisen.

2. Vorrichtung nach Anspruch 1, wobei die vorbestimmte Phase des ersten Taktsignals (Tₙₒₘ₁) keine vorbestimmte Beziehung zu den zueinander unterschiedlichen Phasen der zweiten Taktsignale (Tₙₒₘ₂₁ bis Tₙₒₘ₂ₙ) aufweist und keine vorbestimmte Beziehung zwischen diesen aus dem gesendeten seriellen Datensignal oder den mehreren überabgetasteten Taktsignalen abgeleitet wird.

3. Vorrichtung nach Anspruch 1 oder 2, wobei der Sender (1) weiterhin eine erste Phasenregelschleife (2) zum Empfangen eines ersten Grundtaktsignals (T_{ref1}), zum Regeln der Phase des ersten Taktsignals (Tₙₒₘ₁) zu der Phase des ersten Grundtaktsignals (T_{ref1}) und zum Ableiten der Frequenz des ersten Taktsignals (Tₙₒₘ₁) aus der Frequenz des ersten Grundtaktsignals (T_{ref1}) aufweist.

4. Vorrichtung nach Anspruch 3, wobei der Sender (1) weiterhin einen Serialisierer (3) zum Empfangen von parallelen leitungskodierten Daten und des gewobbelten ersten Taktsignals (Tₙₒₘ₁), zum Wandeln der parallelen leitungskodierten Daten zu dem seriellen Datensignal, und zum Senden des seriellen Datensignals synchron zu dem gewobbelten ersten Taktsignal (Tₙₒₘ₁) aufweist.

5. Vorrichtung nach Anspruch 3 oder 4, wobei die erste Phasenregelschleife (2) aufweist:
einen ersten Phasenkomparator (11), der mit einem Eingang der ersten Phasenregelschleife (2) verbunden ist und das erste Grundtaktsignal (T_{ref1}) empfängt;
einen ersten spannungsgesteuerten Oszillator (12), der mit einem Ausgang des ersten Phasenkomparators (11) verbunden ist, ein Ausgangssignal von diesem empfängt und sein Ausgangssignal zu einem Ausgang der ersten Phasenregelschleife (2) sendet; und
einen ersten Teiler (13), der in einem Rückkopplungspfad zwischen einem anderen Eingang und dem Ausgang der ersten Phasenregelschleife (2) vorgesehen ist und das Ausgangssignal des ersten spannungsgesteuerten Oszillators (12) derart zu dem anderen Eingang der ersten Phasenregelschleife (2) zurückkoppelt, dass der erste Phasenkomparator (11) einen Vergleich zwischen der Phase des ersten Grundtaktsignals (T_{ref1}) und der Phase eines um einen Teilerfaktor des ersten Teilers (13) in der Frequenz geteilten Ausgangssignals des ersten spannungsgesteuerten Oszillators (12) durchführt und ein ein Vergleichsergebnis anzeigendes Signal zu dem ersten spannungsgesteuerten Oszillator (12) sendet.

6. Vorrichtung nach Anspruch 5, wobei ein Wobbelsignal zum Erzeugen des gewobbelten ersten Taktsignals (Tₙₒₘ₁) von dem ersten Teiler (13) empfangen wird.

7. Vorrichtung nach einem der Ansprüche 1 bis 6, wobei der Empfänger (4) weiterhin eine zweite Phasenregelschleife (5) zum Empfangen eines zweiten Grundtaktsignals (T_{ref2}), zum Regeln der Phasen der zweiten Taktsignale (Tₙₒₘ₂₁, Tₙₒₘ₂ₙ) unter Berücksichtigung der Phase des zweiten Grundtaktsignals (T_{ref2}) und zum Ableiten der Frequenz der zweiten Taktsignale (Tₙₒₘ₂₁, Tₙₒₘ₂ₙ) aus der Frequenz des zweiten Grundtaktsignals (T_{ref2}) aufweist.

8. Vorrichtung nach einem der Ansprüche 1 bis 7, wobei der Empfänger (4) weiterhin eine blind überabtastende Takt- und Datenwiedergewinnungseinheit (8) aufweist.

9. Vorrichtung nach Anspruch 8, wobei die blind überabtastende Takt- und Datenwiedergewinnungseinheit (8) eine Mehrzahl von Schieberegistern (6, 7), die jeweils das gesendete serielle Datensignal in Übereinstimmung mit einem jeweiligen der zweiten Taktsignale (Tₙₒₘ₂₁, Tₙₒₘ₂ₙ) erfassen und speichern, und einen Multiplexer (9) aufweist, der anhand des Algorithmus synchron zu dem vorbestimmten der zweiten Taktsignale (Tₙₒₘ₂₁, Tₙₒₘ₂ₙ) das am besten geeignete der mehreren überabgetasteten seriellen Datensignale als das serielle Datensignal ausgibt.

10. Vorrichtung nach Anspruch 9, wobei der Empfänger (4) weiterhin einen Deserialisierer (10) zum Empfangen des von dem Multiplexer (9) ausgegebenen seriellen Datensignals, zum Wandeln des seriellen Datensignals zu parallelen leitungskodierten Daten und zum Ausgeben der parallelen leitungskodierten Daten aus dem Empfänger (4) aufweist.

11. Vorrichtung nach Anspruch 10, wobei die zweite Phasenregelschleife (5) weiterhin aufweist:
einen zweiten Phasenkomparator (14), der mit einem Eingang der zweiten Phasenregelschleife (5) verbunden ist und das zweite Grundtaktsignal (T_{ref2}) empfängt;
einen zweiten spannungsgesteuerten Oszillator (15) für mehrere Phasen, der mit einem Ausgang des zweiten Phasenkomparators (11) verbunden ist, ein Ausgangssignal von diesem empfängt und seine Ausgangssignale für die mehreren Phasen zu Ausgängen der zweiten Phasenregelschleife (5) sendet; und
einen zweiten Teiler (16), der in einem Rückkopplungspfad zwischen einem anderen Eingang und einem der Ausgänge der zweiten Phasenregelschleife (5) vorgesehen ist und ein Ausgangssignal des zweiten spannungsgesteuerten Oszillators (15) derart zu dem anderen Eingang der zweiten Phasenregelschleife (5) zurückkoppelt, dass der zweite Phasenkomparator (14) einen Vergleich zwischen der Phase des zweiten Grundtaktsignals (T_{ref2}) und der Phase eines um einen Teilerfaktor des zweiten Teilers (16) in der Frequenz geteilten Ausgangssignals des zweiten spannungsgesteuerten Oszillators (15) für mehrere Phasen durchführt und ein ein Vergleichsergebnis anzeigendes Signal zu dem zweiten spannungsgesteuerten Oszillator (15) für mehrere Phasen sendet.

12. Verfahren zum seriellen Übertragen von Daten unter Verwendung eines Spreizspektrums zum Erhöhen der elektromagnetischen Verträglichkeit, wobei das Verfahren die Schritte aufweist:
Unterziehen eines eine vorbestimmte Frequenz und eine vorbestimmte Phase aufweisenden ersten Taktsignals (Tₙₒₘ₁) einer Spreizspektrummodulation, Senden eines seriellen Datensignals,
Empfangen des gesendeten seriellen Datensignals unter Verwendung einer Takt- und Datenwiedergewinnung, und
Ausgeben von mindestens einem eines rückgewonnenen Taktsignals und von rückgewonnen Daten,
wobei
die Spreizspektrummodulation durch Wobbeln des Taktsignals (Tₙₒₘ₁) innerhalb eines vorbestimmten Frequenzbereichs durchgeführt wird und das Senden des seriellen Datensignals synchron zu dem gewobbelten Taktsignal (Tₙₒₘ₁) durchgeführt wird,
***dadurch gekennzeichnet, dass***
die Takt- und Datenrückgewinnung derart durchgeführt wird, dass das gesendete serielle Datensignal derart mit mehreren zweiten Taktsignalen (Tnom₂₁ bis Tnom₂ₙ) abgetastet wird, dass mehrere blind überabgetastete serielle Datensignale erzielt werden, wobei ein am besten geeignetes der mehreren blind überabgetasteten seriellen Datensignale anhand eines vorbestimmten Algorithmus synchron zu einem vorbestimmten der zweiten Taktsignale (Tnom₂₁ bis Tₙₒₘ₂ₙ) ausgegeben wird, wobei die zweiten Taktsignale (Tₙₒₘ₂₁ bis Tₙₒₘ₂ₙ) die gleiche vorbestimmte Frequenz wie das erste Taktsignal (Tₙₒₘ₁) und zueinander unterschiedliche Phasen aufweisen.

13. Verfahren nach Anspruch 12, wobei die vorbestimmte Phase des ersten Taktsignals (Tₙₒₘ₁) keine vorbestimmte Beziehung zu den zueinander unterschiedlichen Phasen der zweiten Taktsignale (Tₙₒₘ₂₁ bis Tₙₒₘ₂ₙ) aufweist und keine vorbestimmte Beziehung zwischen diesen aus dem gesendeten seriellen Datensignal oder den mehreren überabgetasteten Taktsignalen abgeleitet wird.

14. Verfahren nachAnspruch 12 oder 13, das weiterhin die Schritte eines Empfangens eines ersten Grundtaktsignals (T_{ref1}), eines Regelns der Phase des ersten Taktsignals (Tₙₒₘ₁) zu der Phase des ersten Grundtaktsignals (T_{ref1}) und eines Ableitens der Frequenz des ersten Taktsignals (Tₙₒₘ₁) aus der Frequenz des ersten Grundtaktsignals (T_{ref1}) aufweist.

15. Verfahren nach einem der Ansprüche 12 bis 14, das weiterhin die Schritte eines Empfangens von parallelen leitungskodierten Daten und des gewobbelten ersten Taktsignals (Tₙₒₘ₁), eines Wandelns der parallelen leitungskodierten Daten zu dem seriellen Datensignal, und eines Sendens des seriellen Datensignals synchron zu dem gewobbelten ersten Taktsignal (Tₙₒₘ₁) aufweist.

## Claims

1. Apparatus for serial transmission of data by using a spread spectrum for enhancing electromagnetic compatibility, wherein the apparatus comprises:
a transmitter (1) for subjecting a clock signal (Tₙₒₘ₁) having a predetermined frequency and a predetermined phase to a spread-spectrum modulation and for transmitting a serial data signal; and
a receiver (4) for receiving the serial data signal transmitted by the transmitter (1) by using a clock and data retrieval and for outputting at least one of a retrieved clock signal and of retrieved data, wherein
the transmitter (1) performs the spread-spectrum modulation by wobbling the clock signal (Tₙₒₘ₁) within a predetermined frequency range, and transmission of the serial data signal is performed in synchronicity with the wobbled clock signal (Tnom1),
***characterized in that***
the clock and data retrieval is performed by the receiver (4) **in that** the receiver (4) samples the serial data signal transmitted by the transmitter (1) with several second clock signals (Tₙₒₘ₂₁ to Tₙₒₘ₂ₙ) such that several blind-oversampled serial data signals are obtained, wherein a best-suited one of the several blind-oversampled serial data signals is output based on a predetermined algorithm in synchronicity with a predetermined one of the second clock signals (Tₙₒₘ₂₁ to Tₙₒₘ₂ₙ) with the second clock signals (Tₙₒₘ₂₁ to Tₙₒₘ₂ₙ) having the same predetermined frequency as the first clock signal (Tₙₒₘ₁) and phases different from each other.

2. The apparatus in accordance with claim 2, wherein the predetermined phase of the first clock signal (Tₙₒₘ₁) does not have a predetermined relationship with the mutually different phases of the second clock signals (Tₙₒₘ₂₁ to Tₙₒₘ₂ₙ), and no predetermined relationship between them is derived from the transmitted serial data signal or from the several oversampled clock signals.

3. The apparatus in accordance with claim 1 or 2, wherein the transmitter (1) further comprises a first phase-locked loop (2) for receiving a first basic clock signal (T_{ref1}), for controlling the phase of the first clock signal (Tₙₒₘ₁) to the phase of the first basic clock signal (T_{ref1}), and for deriving the frequency of the first clock signal (Tₙₒₘ₁) from the frequency of the first basic clock signal (T_{ref1}).

4. The apparatus in accordance with claim 3, wherein the transmitter (1) further comprises a serializer (3) for receiving parallel line-encoded data and the wobbled first clock signal (Tₙₒₘ₁), for converting the parallel line-encoded data into the serial data signal, and for transmitting the serial data signal in synchronicity with the wobbled first clock signal (Tₙₒₘ₁).

5. The apparatus in accordance with claim 3 or 4, wherein the first phase-locked loop (2) comprises:
a first phase comparator (11) which is connected with an input of the first phase-locked loop (2) and receives the first basic clock signal (T_{ref1});
a first voltage-controlled oscillator (12) which is connected with an output of the first phase comparator (11), receives an output signal from the latter, and sends its output signal to an output of the first phase-locked loop (2); and
a first divider (13) which is provided in a feedback path between another input and the output of the first phase-locked loop (2) and feeds back the output signal of the first voltage-controlled oscillator (12) to the other input of the first phase-locked loop (2) such that the first phase comparator (11) performs a comparison between the phase of the first basic clock signal (T_{ref1}) and the phase of an output signal of the first voltage-controlled oscillator (12) divided in its frequency by a divider factor of the first divider (13), and sends a signal indicating a comparison result to the first voltage-controlled oscillator (12).

6. The apparatus in accordance with claim 5, wherein a wobble signal for generating the wobbled first clock signal (Tₙₒₘ₁) is received by the first divider (13).

7. The apparatus in accordance with any one of claims 1 to 6, wherein the receiver (4) further comprises a second phase-locked loop (5) for receiving a second basic clock signal (T_{ref2}), for controlling the phases of the second clock signals (Tₙₒₘ₂₁, Tₙₒₘ₂ₙ) while considering the phase of the second basic clock signal (T_{ref2}), and for deriving the frequency of the second clock signals (Tₙₒₘ₂₁, Tₙₒₘ₂ₙ) from the frequency of the second basic clock signal (T_{ref2}).

8. The apparatus in accordance with any one of claims 1 to 7, wherein the receiver (4) further comprises a blind-oversampling clock and data retrieving unit (8).

9. The apparatus in accordance with claim 8, wherein the blind-oversampling clock and data retrieving unit (8) comprises a plurality of shift registers (6, 7) detecting and storing the respective transmitted serial data signal in correspondence with a respective one of the second clock signals (Tₙₒₘ₂₁, Tₙₒₘ₂ₙ), and a multiplexer (9) which outputs the best-suited one of the several oversampled serial data signals as the serial data signal based on the algorithm in synchronicity with the predetermined one of the second clock signals (Tₙₒₘ₂₁, Tₙₒₘ₂ₙ).

10. The apparatus in accordance with claim 9, wherein the receiver (4) further comprises a deserializer (10) for receiving the serial data signal output by the multiplexer (9), for converting the serial data signal into parallel line-encoded data, and for outputting the parallel line-encoded data from the receiver (4).

11. The apparatus in accordance with claim 10, wherein the second phase-locked loop (5) further comprises:
a second phase comparator (14) which is connected with an input of the second phase-locked loop (5) and receives the second basic clock signal (T_{ref2});
a second voltage-controlled oscillator (15) for several phases which is connected with an output of the second phase comparator (11), receives an output signal from the latter, and sends its output signals for the several phases to outputs of the second phase-locked loop (5); and
a second divider (16) which is provided in a feedback path between another input and one of the outputs of the second phase-locked loop (5) and feeds an output signal of the second voltage-controlled oscillator (15) back to the other input of the second phase-locked loop (5) such that the second phase comparator (14) performs a comparison between the phase of the second basic clock signal (T_{ref2}) and the phase of an output signal of the second voltage-controlled oscillator (15) for several phases that is divided in its frequency by a divider factor of the second divider (16), and sends a signal indicating a comparison result to the second voltage-controlled oscillator (15) for several phases.

12. A method for serial transmission of data by using a spread spectrum for enhancing electromagnetic compatibility, wherein the method comprises the steps of:
subjecting a first clock signal (Tₙₒₘ₁) having a predetermined frequency and a predetermined phase to a spread-spectrum modulation,
transmitting a serial data signal,
receiving the transmitted serial data signal by using a clock and data retrieval, and
outputting at least one of a retrieved clock signal and of retrieved data, wherein
the spread-spectrum modulation is performed by wobbling the clock signal (Tₙₒₘ₁) within a predetermined frequency range, and transmission of the serial data signal is performed in synchronicity with the wobbled first clock signal (Tₙₒₘ₁),
***characterized in that***
the clock and data retrieval is performed such that the transmitted serial data signal is sampled with several second clock signals (Tₙₒₘ₂₁ to Tₙₒₘ₂ₙ) such that several blind-oversampled serial data signals are obtained, wherein a best-suited one of the several blind-oversampled serial data signals is output based on a predetermined algorithm in synchronicity with a predetermined one of the second clock signals (Tₙₒₘ₂₁ to Tₙₒₘ₂ₙ), with the second clock signals (Tₙₒₘ₂₁ to Tₙₒₘ₂ₙ) having the same predetermined frequency as the first clock signal (Tₙₒₘ₁) and phases different from each other.

13. The method in accordance with claim 12, wherein the predetermined phase of the first clock signal (Tₙₒₘ₁) does not have a predetermined relationship with the mutually different phases of the second clock signals (Tₙₒₘ₂₁ to Tₙₒₘ₂ₙ), and no predetermined relationship between the latter is derived from the transmitted serial data signal or from the several oversampled clock signals.

14. The method in accordance with claim 12 to 13, further comprising the steps of receiving a first basic clock signal (T_{ref1}), controlling the phase of the first clock signal (Tₙₒₘ₁) to the phase of the first basic clock signal (T_{ref1}), and deriving the frequency of the first clock signal (Tₙₒₘ₁) from the frequency of the first basic clock signal (T_{ref1}).

15. The method in accordance with any one of claims 12 to 14, further comprising the steps of receiving parallel line-encoded data and the wobbled first clock signal (Tₙₒₘ₁), converting the parallel line-encoded data to the serial data signal, and transmitting the serial data signal in synchronicity with the wobbled first clock signal (Tₙₒₘ₁).

## Revendications

1. Dispositif pour la transmission de données en série recourant à un spectre étalé pour élever la compatibilité électromagnétique, ledit dispositif comprenant :
un émetteur (1) pour soumettre un signal d'horloge (Tₙₒₘ₁) présentant une fréquence prédéfinie et une phase prédéfinie à une modulation à étalement de spectre et pour émettre un signal de données en série ; et un récepteur (4) pour la réception du signal de données en série émis par l'émetteur (1) en recourant à une récupération d'horloge et de données, et pour la sortie d'au moins un premier signal d'horloge récupéré et de données récupérées,
où
l'émetteur (1) exécute la modulation à étalement de spectre par vobulation du signal d'horloge (Tₙₒₘ₁) à l'intérieur d'une plage de fréquences prédéfinie et effectue l'émission du signal de données en série synchronisée avec le signal d'horloge vobulé (Tₙₒₘ₁),
**caractérisé en ce que**
la récupération d'horloge et de données est effectuée par le récepteur (4), de telle manière que le récepteur (4) échantillonne le signal de données en série émis par l'émetteur (1) avec plusieurs deuxièmes signaux d'horloge (Tnom₂₁ à Tₙₒₘ₂ₙ) pour obtenir plusieurs signaux de données en série suréchantillonnés à l'aveugle, un signal, le plus approprié parmi les plusieurs signaux de données en série suréchantillonnés à l'aveugle, étant sorti sur la base d'un algorithme prédéfini, synchronisé avec un signal d'horloge prédéfini parmi les deuxièmes signaux d'horloge (Tₙₒₘ₂₁ à Tₙₒₘ₂ₙ), les deuxièmes signaux d'horloge (Tₙₒₘ₂₁ à Tₙₒₘ₂ₙ) présentant la même fréquence prédéfinie que le premier signal d'horloge (Tₙₒₘ₁) et étant pourvus de phases différentes entre elles.

2. Dispositif selon la revendication 1, où la phase prédéfinie du premier signal d'horloge (Tₙₒₘ₁) ne présente aucune relation prédéfinie aux phases différentes entre elles des deuxièmes signaux d' horloge (Tₙₒₘ₂₁ à Tₙₒₘ₂ₙ) et où aucune relation prédéfinie entre celles-ci n'est déduite du signal de données en série émis ou des plusieurs signaux d'horloge suréchantillonnés.

3. Dispositif selon la revendication 1 ou la revendication 2, où l'émetteur (1) comporte en outre une première boucle d'asservissement de phase (2) pour la réception d'un premier signal d'horloge de base (T_{ref2}) pour la régulation de la phase du premier signal d'horloge (Tₙₒₘ₁) à la phase du premier signal d'horloge de base (T_{ref1}) et pour la déduction de la fréquence du premier signal d'horloge (Tₙₒₘ₁) de la fréquence du premier signal d'horloge de base (T_{ref1}).

4. Dispositif selon la revendication 3, où l'émetteur (1) comporte en outre un sérialiseur (3) pour la réception de données parallèles codées en ligne et du premier signal d'horloge vobulé (Tₙₒₘ₁) pour la conversion des données parallèles codées en ligne en signal de données en série, et pour l'émission du signal de données en série synchronisée avec le premier signal d'horloge vobulé (Tₙₒₘ₁).

5. Dispositif selon la revendication 3 ou la revendication 4, où la première boucle d'asservissement de phase (2) comprend :
un premier comparateur de phases (11), relié à une entrée de la première boucle d'asservissement de phase (2) et qui reçoit le premier signal d'horloge de base (T_{ref1}) ;
un premier oscillateur commandé en tension (12), relié à une sortie du premier comparateur de phases (11), qui reçoit un signal de sortie de ce dernier et qui adresse son signal de sortie à une sortie de la première boucle d'asservissement de phase (2) ; et
un premier diviseur (13), prévu sur un chemin de rétrocouplage entre une autre entrée et la sortie de la première boucle d'asservissement de phase (2) et qui rétro-couple le signal de sortie du premier oscillateur commandé en tension (12) sur l'autre entrée de la première boucle d'asservissement de phase (2), de telle manière que le premier comparateur de phases (11) exécute une comparaison entre la phase du premier signal d'horloge de base (T_{ref1}) et la phase d'un signal de sortie du premier oscillateur commandé en tension (12), divisé en fréquence d'un facteur de division du premier diviseur (13), et adresse un signal indicateur du résultat de comparaison au premier oscillateur commandé en tension (12).

6. Dispositif selon la revendication 5, où un signal vobulé est reçu du premier diviseur (13) pour la génération du premier signal d'horloge vobulé (Tₙₒₘ₁) :

7. Dispositif selon l'une des revendications 1 à 6, où le récepteur (4) comporte en outre une deuxième boucle d'asservissement de phase (5) pour la réception d'un deuxième signal d'horloge de base (T_{ref2}) pour la régulation de la phase des deuxièmes signaux d'horloge (Tₙₒₘ₂₁, Tₙₒₘ₂ₙ) en tenant compte de la phase du deuxième signal d'horloge de base (T_{ref2}) et pour la déduction de la fréquence des deuxièmes signaux d'horloge (Tₙₒₘ₂₁, Tₙₒₘ₂ₙ) de la fréquence du deuxième signal d'horloge de base (T_{ref2}).

8. Dispositif selon l'une des revendications 1 à 7, où le récepteur (4) comprend en outre une unité de récupération d'horloge et de données (8) suréchantillonnant à l'aveugle.

9. Dispositif selon la revendication 8, où l'unité de récupération d'horloge et de données (8) suréchantillonnant à l'aveugle comprend une pluralité de registres à décalage (6, 7) qui saisissent et mémorisent le signal de données émis en série en concordance avec un des deuxièmes signaux d'horloge (Tₙₒₘ₂₁, Tₙₒₘ₂ₙ), ainsi qu'un multiplexeur (9) sortant sur la base de l'algorithme, et synchronisé avec le deuxième signal d'horloge prédéfini (Tₙₒₘ₂₁, Tₙₒₘ₂ₙ), le plus approprié parmi les plusieurs signaux de données en série suréchantillonnés, en tant que signal de données en série.

10. Dispositif selon la revendication 9, où le récepteur (4) comprend en outre un désérialiseur (10) pour la réception du signal de données en série.sorti par le multiplexeur (9), pour la conversion du signal de données en série en données parallèles codées en ligne et pour la sortie hors du récepteur (4) des données parallèles codées en ligne.

11. Dispositif selon la revendication 10, où la deuxième boucle d'asservissement de phase (5) comprend en outre :
un deuxième comparateur de phases (14), relié à une entrée de la deuxième boucle d'asservissement de phase (5) et qui reçoit le deuxième signal d'horloge de base (T_{ref2})
un deuxième oscillateur commandé en tension (15) pour plusieurs phases, relié à une sortie du deuxième comparateur de phases (11), qui reçoit un signal de sortie de ce dernier et qui adresse ses signaux de sortie pour les plusieurs phases à des sorties de la deuxième boucle d'asservissement de phase (5) ; et
un deuxième diviseur (16), prévu sur un chemin de rétrocouplage entre une autre entrée et une des sorties de la deuxième boucle d'asservissement de phase (5) et qui rétro-couple un signal de sortie du deuxième oscillateur commandé en tension (15) sur l'autre entrée de la deuxième boucle d'asservissement de phase (5), de telle manière que le deuxième comparateur de phases (14) exécute une comparaison entre la phase du deuxième signal d'horloge de base (T_{ref2}) et la phase d'un signal de sortie du deuxième oscillateur commandé en tension (15) pour plusieurs phases, divisé en fréquence d'un facteur de division du deuxième diviseur (16), et adresse un signal indicateur du résultat de comparaison au deuxième oscillateur commandé en tension (15) pour plusieurs phases.

12. Procédé pour la transmission de données en série recourant à un spectre étalé pour élever la compatibilité électromagnétique, ledit procédé comprenant les étapes suivantes :
soumission d'un premier signal d'horloge (Tₙₒₘ₁) présentant une fréquence prédéfinie et une phase prédéfinie à une modulation à étalement de spectre,
émission d'un signal de données en série,
réception du signal de données en série émis en recourant à une récupération d'horloge et de données, et
sortie d'au moins un premier signal d'horloge récupéré et de données récupérées,
où
la modulation à étalement de spectre est exécutée par vobulation du signal d'horloge (Tₙₒₘ₁) à l'intérieur d'une plage de fréquences prédéfinie, et l'émission du signal de données en série est synchronisée avec le signal d'horloge vobulé (Tₙₒₘ₁),
**caractérisé en ce que**
la récupération d'horloge et de données est effectuée de telle manière que le signal de données en série est suréchantillonné avec plusieurs deuxièmes signaux d'horloge (Tₙₒₘ₂₁ à Tₙₒₘ₂ₙ) pour obtenir plusieurs signaux de données en série suréchantillonnés à l'aveugle, un signal, le plus approprié parmi les plusieurs signaux de données en série suréchantillonnés à l'aveugle, étant sorti sur la base d'un algorithme prédéfini, synchronisé avec un signal d'horloge prédéfini parmi les deuxièmes signaux d'horloge (Tₙₒₘ₂₁ à Tₙₒₘ₂ₙ), les deuxièmes signaux d'horloge (Tₙₒₘ₂₁ à Tₙₒₘ₂ₙ) présentant la même fréquence prédéfinie que le premier signal d'horloge (Tₙₒₘ₁) et étant pourvus de phases différentes entre elles.

13. Procédé selon la revendication 12, où la phase prédéfinie du premier signal d'horloge (Tₙₒₘ₁) ne présente aucune relation prédéfinie aux phases différentes entre elles des deuxièmes signaux d'horloge (Tₙₒₘ₂₁ à Tₙₒₘ₂ₙ) et où aucune relation prédéfinie entre celles-ci n'est déduite du signal de données en série émis ou des plusieurs signaux d'horloge suréchantillonnés.

14. Procédé selon la revendication 12 ou la revendication 13, comprenant en outre les étapes de réception d'un premier signal d'horloge de base (T_{ref1}), de régulation de la phase du premier signal d'horloge (Tₙₒₘ₁) à la phase du premier signal d'horloge de base (T_{ref1}), et de déduction de la fréquence du premier signal d'horloge (Tₙₒₘ₁) de la fréquence du premier signal d'horloge de base (T_{ref1}),

15. Procédé selon l'une des revendications 12 à 14, comprenant en outre les étapes de réception de données parallèles codées en ligne et du premier signal d'horloge vobulé (Tₙₒₘ₁), de conversion des données parallèles codées en ligne en signal de données en série, et d'émission du signal de données en série synchronisée avec le premier signal d'horloge vobulé (Tₙₒₘ₁).
